# EUROPEAN PATENT APPLICATION

(11) **EP 1 717 465 A1**
(43) Date of publication of application: **02.11.2006**
(21) Application number: 05009027.3
(22) Date of filing: 25.04.2005
(51) Int. Cl.: F16C 19/52, G01P 3/44, B60B 27/00

(54) **Wheel-hub unit with a speed sensor**

(71) Applicant: Aktiebolaget SKF, 415 50 Göteborg (SE)
(72) Inventor: Savarese, Claudio, 10060 Airasca Torino (IT); Vignotto, Angelo, 10134 Torino (IT)
(74) Representative: Lotti, Giorgio

(57) **Abstract**

Bearing (3) wheel-hub unit (1) with a speed sensor (2), the group (1) being provided with a fixed outer race (32) which is provided with an annular border (34) which is arranged axially inside the group (1), and by a support collar (6), which supports the sensor (2), and which presents a centring portion (61) for centring a mount, and an anchoring portion (62), which is axially near to the centring portion (61) and is shrink-fit inside the annular border (34) in order to anchor the collar to the annular border (34) itself.

## Description

The present invention relates to a bearing wheel-hub unit with a speed sensor.

In general, bearing wheel-hub units with sensors comprise a mounting flange for a wheel which is integral with an inner race of the bearing, an outer fixed race which is provided with an annular border which is arranged axially opposite the flange, or rather axially inside the unit, and a support collar, which supports the speed sensor, and which is shrink-fit onto an external surface of the annular border in order to define, in addition, a centring element for the subsequent mounting of a mount onto the collar itself.

The solution which has just been described presents some disadvantages which are due essentially to the presence of the above-mentioned support collar, which might not only give rise to galvanic corrosion phenomena due to its own contact with the mount, but which also makes it necessary to carry out particular working on the external surface of the annular border onto which it is shrink-fit with consequent increases in costs and production times.

The aim of the present invention is to produce a bearing wheel-hub unit, which will be free from the disadvantages which have just been described above.

According to the present invention, a bearing wheel-hub unit with a speed sensor will be produced, the unit comprising a fixed outer race which is provided with an annular border which is arranged axially inside the unit, and a support collar, which supports the speed sensor, and which is connected to the said annular border in order to define, in addition, a centring element for the subsequent mounting of a mount onto the collar itself; the unit being characterised by the fact that the collar presents a centring portion for the centring of the said mount, and an anchoring portion, which is axially near to the centring portion and which is shrink-fit inside the annular border in order to anchor the collar to the annular border itself.

The present invention will now be described with reference to the attached drawings, which illustrate a non-limiting form of embodiment of the present invention, and in which:
- FIGURE 1 is a section view of a preferred form of embodiment of a bearing wheel-hub unit with a speed sensor according to the present invention; and
- FIGURE 2 illustrates, on an enlarged scale, a detail of the unit which is shown in FIGURE 1.

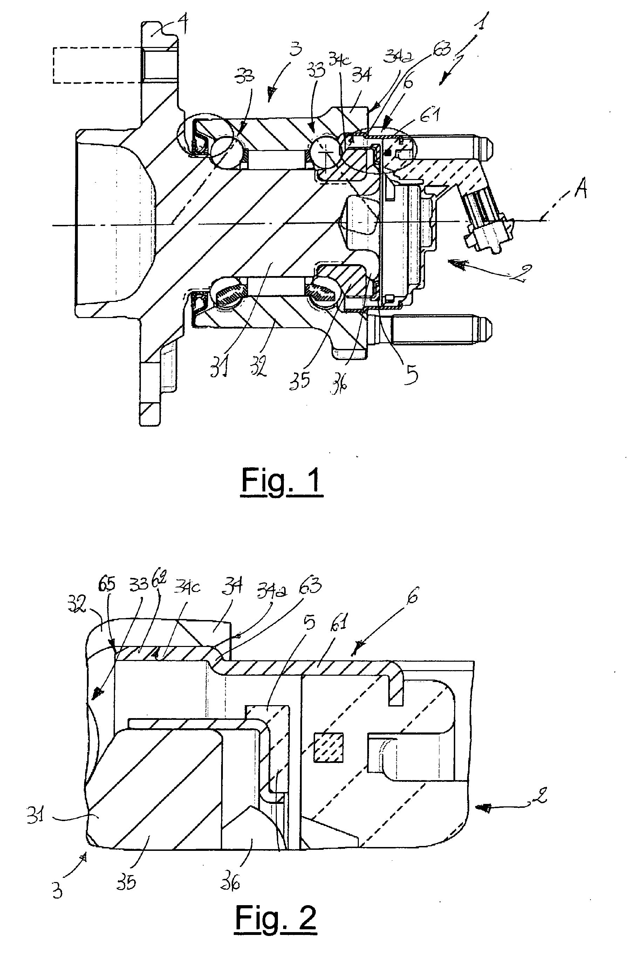

With reference to FIGURE 1, the number 1 is used to indicate, in its entirety, a bearing wheel-hub unit with a speed sensor 2.

The unit 1 presents a rotation axis A, and comprises a rolling contact bearing 3, a connection flange 4 for a wheel (which is not illustrated) an encoder 5 which can rotate around the axis A, and a support collar 6 for the sensor 2.

The bearing 3 comprises an inner race 31 which can rotate around the axis A and which is integral with the flange 4, and an outer race 32, which is mounted around the inner race 31 by means of the interposition of two crowns of spheres 33, and which is provided with an annular border 34 which is arranged axially opposite the flange 4.

The border 34 is axially limited by an annular surface 34a which is transverse to the axis A, and is radially delimited towards the axis A by a cylindrical surface 34c which is co-axial to the axis A.

In addition, the race 31 presents an annular insert 35, which is axially blocked by a rolled bead 36 in a position which is substantially co-axial to the border 34 in order to maintain the unit 1 in its assembled configuration, and support the encoder 5 in a position which faces the sensor 2 and is inside the collar 6.

In addition, the collar 6 is connected to the annular border 34 in order to define a centring element for the subsequent mounting of a mount (which is noted but not illustrated) onto the collar 6 itself, and which comprises a centring portion 61 for the centring of the above-mentioned mount, and an anchoring portion 62, which is axially near the centring portion 61, and which is shrink-fit into the surface 34c of the annular border 34 in order to anchor the collar 6 to the annular border 34 itself.

In addition, the collar 6 comprises a transition portion 63, which connects the anchoring portion 62 and the centring portion 61 to each other, and which can be axially aligned with the annular surface 34a.

In particular, the anchoring portion 62 and the centring portion 61 are of a cylindrical shape, and as the portion 62 presents an external diameter of dimensions which are greater than an external diameter of the portion 61, the portion 63 presents a substantially conical shape which tapers decreasingly towards the portion 61.

In addition, the portion 62 is provided with an end bevel 65 which is suitable for permitting an easier axial introduction of the collar 6 inside the border 34 and which also facilitates the relative fixing operation.

In practice, once the collar 6 has been fixed inside the border 34, the surface 34a remains free outside the collar 6 itself, and the unit 1 can be assembled on the above-mentioned mount, which is mounted onto the collar 6 in order to be centred in relation to the axis A, and which is placed in such a way as to axially abut against the surface 34a blocking at the same time the collar 6 itself due to the presence of the portion 63.

The mounting of the collar 6 inside the border 34 leads to a reduction in the time necessary for the mechanical working of the unit 1 due to the fact that the border 34 need only be worked on the surface 34c, and also permits a reduction in the deformation of the bearing 3, following the fixture of the border 34, with consequent advantages for the working life of the bearing 3 itself, and also for the stability of the sensor 2.

It is intended that the present invention should not be limited to the form of embodiment which is herein described and illustrated, which is to be considered as an example of a form of embodiment of the bearing wheel-hub group with speed sensor, and which may instead undergo further modifications to the shape and disposition of its parts, as well as to details pertaining to construction and assembly.

## Claims

1. Bearing (3) wheel-hub unit (1) with a speed sensor (2), the unit (1) comprising a fixed outer race (32) which is provided with an annular border (34) which is arranged axially inside the unit (1), and a support collar (6), which supports the speed sensor (2), and which is connected to the said annular border (34) in order to define, in addition, a centring element for the subsequent mounting of a mount onto the collar (6) itself; the unit (1) being **characterised by** the fact that the collar (6) presents a centring portion (61) for the centring of the said mount, and an anchoring portion (62), which is axially near to the centring portion (61) and which is shrink-fit inside the annular border (34) in order to anchor the collar (6) to the annular border (34) itself.

2. Unit according to Claim 1, **characterised by** the fact that the anchoring portion (62) presents an external diameter of dimensions which are greater than the dimensions of an external diameter of the centring portion (61).

3. Unit according to Claim 2, **characterised by** the fact that the said annular border (34) presents a frontal surface (34a) which is transverse to a rotation axis (A) of the bearing (3), which defines an axial striker for the said mount.

4. Unit according to Claim 3, **characterised by** the fact that the said frontal surface (34a) is a free surface.

5. Unit according to Claim 4, **characterised by** the fact that the support collar (6) comprises a transition portion (63), which connects the anchoring portion (62) and the centring portion (61) to each other and which may be axially aligned with the said frontal surface and (34a).
